# EUROPÄISCHE PATENTSCHRIFT

(11) **EP 4 293 761 B1**
(45) Veröffentlichungstag und Bekanntmachung des Hinweises auf die Patenterteilung: **04.11.2026**
(21) Anmeldenummer: 22179644.4
(22) Anmeldetag: 17.06.2022
(51) Int. Cl.: H01M 8/00, H01M 8/0258, H01M 8/026, H01M 8/18

(54) **FLUIDSTRÖMUNGSFÜHRUNG FÜR DAS FÜHREN EINES STRÖMENDEN FLUIDS UND VERWENDUNGEN FÜR DIE FLUIDSTRÖMUNGSFÜHRUNG**
FLUID FLOW GUIDE FOR GUIDING A FLOWING FLUID AND APPLICATIONS FOR FLUID FLOW GUIDANCE
GUIDAGE DE L'ÉCOULEMENT DE FLUIDE POUR LE GUIDAGE D'UN FLUIDE EN ÉCOULEMENT ET UTILISATIONS DU GUIDAGE DE L'ÉCOULEMENT DE FLUIDE

(43) Veröffentlichungstag der Anmeldung: 20.12.2023
(73) Patentinhaber: Jena Flow Batteries GmbH, 07745 Jena (DE)
(72) Erfinder: CONRAD, Olaf, 07743 Jena (DE); HAUTMANN, Gerhard, 07743 Jena (DE); ELLMANN, Richard, 07743 Jena (DE); FREYER, Erik, 07743 Jena (DE); SCHMIDT, Stefan, 07743 Jena (DE); SMOLLICH, Yannis, 07743 Jena (DE)
(74) Vertreter: Michalski Hüttermann & Partner mbB

(56) Entgegenhaltungen:
- DE-A1- 10 245 660
- DE-A1- 102014 112 607
- GB-A- 2 342 222
- US-A1- 2021 359 328

## Beschreibung

Die Erfindung betrifft Fluidströmungsführung für das Führen eines strömenden Fluids nach dem Oberbegriff des Anspruchs 1 zwischen einem ersten Anschluss der Fluidströmungsführung an einen Fluidkanal und einem zweiten Anschluss der Fluidströmungsführung, wobei die Fluidströmungsführung eine langgestreckte geschwungene Kurvenbahn beschreibt, die zwischen dem ersten Anschluss und dem zweiten Anschluss verläuft. Ferner bezieht sich die Erfindung auf bevorzugte Verwendungen der vorgeschlagenen Fluidströmungsführung entsprechend den Ansprüchen 12 bis 14.

Derartige Fluidströmungen sind bekannt und werden in vielfältigen Anwendungen eingesetzt, wobei die Kurvenbahn von den jeweiligen geometrischen Gegebenheiten abhängt. Eine gerade oder geschwungenen Kurvenbahn der Fluidströmungsführung stellt hydraulisch in der Regel kein Problem dar, weil sich in solchen Kurvenbahnen ohne Kanten und enge Krümmungsradien eine in der Regel laminare Strömung mit vergleichsweise niedrigem Strömungswiderstand (hydraulischem Widerstand) ausbildet. An engen, bspw. kreis- oder teilkreisförmigen Krümmungsradien oder Kanten treten dagegen Verwirbelungen in der Fluidströmung auf, die zu einem erhöhten Strömungswiderstand bzw. hydraulischen Widerstand führen. Um dem entgegenzuwirken, wird das Fluid meist mit einem höheren Druck beaufschlagt, um einen bestimmten Fluidmassestrom sicherzustellen. Dies ist prozesstechnisch aber schwerer zu handhaben und stellt höhere mechanische bzw. druckmechanische Anforderungen an das verwendete Material.

In der Regel finden sich in der Kurvenbahn mindestens eine Kurvenumlenkung mit engem Krümmungsradius und/oder großer Umlenkung (70° und mehr) und mindestens eine an die Kurvenumlenkung anschließende gerade oder geschwungene Kurvenführung. In bevorzugten Ausführungsformen, in den die Erfindung besonders vorteilhaft anwendbar ist, sind in der Kurvenbahn mindestens zwei Kurvenumlenkungen, beispielsweise an einander gegenüberliegenden Enden der Kurvenbahn, vorgesehen. In der Kurvenumlenkung bzw. in den Kurvenumlenkungen (im Falle mehrerer Kurvenumlenkungen) wird die Kurvenbahn erfindungsgemäß um mindestens 70° (oder erfindungsgemäß um mindestens etwa 90°) umgelenkt. Gemäß einer besonders bevorzugten Ausführungsform kann eine Umlenkung der Kurvenbahn von etwa 180° oder mehr vorgesehen sein, bspw. etwa zwischen 160° und 290°, besonders bevorzugt zwischen 180° und 240° (oder 180° und 220°). Im Falle mehrerer Kurvenumlenkungen sind besonders bevorzugt zwei Kurvenumlenkungen an einander gegenüberliegenden Enden der Kurvenbahn vorgesehen und weiter vorzugsweise durch gerade oder geschwungene Kurvenführungen miteinander verbunden. Hierdurch werden typische erfindungsgemäße Kurvenführungen erfasst bzw. beschrieben.

DE 10 2014 112607 A1 beschreibt ein Strömungselement, welches einen plattenförmigen Grundkörper umfasst, der als ein Blechumformprodukt ausgebildet ist und eine Kanalstruktur aufweist, wobei die Kanalstruktur mehrere Kanäle umfasst, welche durch Vertiefungen in dem Grundkörper gebildet und durch Erhöhungen des Grundkörpers voneinander getrennt sind, wobei mindestens ein Bereich mit Normalniveaudifferenz vorgesehen ist, welche bezüglich einer senkrecht zu zwei Haupterstreckungsrichtungen des Grundkörpers verlaufenden Höhenrichtung einen Höhenunterschied zwischen einer Vertiefung und einer angrenzenden Erhöhung bezeichnet, wobei mindestens ein Bereich mit reduzierter Niveaudifferenz vorgesehen ist, in welchem ein Höhenunterschied zwischen einer Vertiefung und einer angrenzenden Erhöhung geringer ist als die Normalniveaudifferenz, wobei der mindestens eine Bereich mit reduzierter Niveaudifferenz einen Paralleldehnungsbereich des Grundkörpers umfasst, welcher bei einer aus der Umformung des Blechumformprodukts resultierenden Dehnung des Grundkörpers längs Dehnungsvektoren gedehnt ist, die in parallel zueinander verlaufenden Ebenen liegen, wobei der mindestens eine Bereich mit reduzierter Niveaudifferenz, welcher den Paralleldehnungsbereich des Grundkörpers umfasst, an einen Krümmungsdehnungsbereich des Grundkörpers angrenzt, welcher bei einer aus der Umformung des Blechumformprodukts resultierenden Dehnung des Grundkörpers längs Dehnungsvektoren gedehnt ist, die in sich schneidenden Ebenen liegen.

DE 102 45 660 A1 beschreibt eine Brennstoffzellenanlage mit einer Brennstoffzelleneinheit, einer Umformeinheit zur Umformung von Stoffgemischen zu einem wasserstoffhaltigen Fluidstrom und einer Trennvorrichtung zur Abtrennung wenigstens eines wasserstoffangereicherten Stoffstroms von einem Fluidreststrom, wobei die Trennvorrichtung als Massen-Trennvorrichtung zur Abtrennung unterschiedlicher Massen ausgebildet ist.

US 2021/359328 A1 beschreibt eine Redox-Flow-Batterie und ein Batteriesystem wobei die Redox-Flow-Batterie eine Zellenstapelanordnung umfasst, die von zwei Endplatten umgeben wird und eine Vielzahl von zusammengefügten Membranrahmenplatten und bipolaren Rahmenplatten umfasst, die an einer zusammengefügten Schnittstelle eine Vielzahl von negativen und positiven Flusskanälen bilden, die so konfiguriert sind, dass sie negativen und positiven Elektrolyt in eine Vielzahl von bipolaren Platten verteilen. In der Batterie ist jede Membranrahmenplatte mit einer Membran verbunden, die sequenziell zwischen zwei der in der Vielzahl der Bipolarplatten enthaltenen Bipolarplatten angeordnet ist.

GB 2 342 222 A beschreibt einen Strömungsrahmen zum Bilden einer Unterbaugruppe; wobei die Unterbaugruppe eine bipolare Elektrode und eine ionenselektive Membran umfasst, die auf dem Strömungsrahmen montiert sind, und wobei die Unterbaugruppe mit anderen derartigen Unterbaugruppen gestapelt werden kann, um eine Anordnung von elektrochemischen Zellen zu bilden; wobei der Strömungsrahmen aus einem elektrisch isolierenden Material gebildet ist und mindestens vier Verteilerabschnitte umfasst, die auch Wege für den Durchgang des Anolyten/Katholyten definieren.

Aufgabe der vorliegenden Erfindung ist es, für aus dem Stand der Technik bekannte Fluidströmungsführungen ein verbessertes Strömungsverhalten bei möglichst kompakter (etwa geometrischer) Ausdehnung vorzuschlagen.

Diese Aufgabe wird bei der Fluidströmungsführung der eingangs genannten Art insbesondere mit den Merkmalen des Anspruchs 1 gelöst. Es ist vorgesehen, der Strömungsquerschnitt der Kurvenbahn im Bereich der Kurvenumlenkungen größer ist als im Bereich der geraden oder geschwungenen Kurvenführungen. Damit wird im Bereich der Kurvenumlenkungen ein effektiver Strömungsquerschnitt für das Fluid erreicht, der in etwa dem Strömungsquerschnitt für die laminare Strömung im Bereich der Kurvenführung(en) entspricht, weil durch den vergrößerten Strömungsquerschnitt im Bereich der Umlenkungen Raum für Verwirbelungsbereiche vorhanden ist, ohne den hydraulisch für die Fluidströmung effektiv zur Verfügung stehenden Strömungsquerschnitt zu reduzieren bzw. reduzieren zu müssen.

Nach einer bevorzugten Ausführungsform der Erfindung kann vorgesehen sein, dass die Kurvenumlenkung auf einer Kreisbahn bzw. Teilkreisbahn erfolgt, wobei die Innenkante und die Außenkante der Kurvenumlenkung jeweils einen Teilkreisbogen mit festem Radius beschreiben und die Mittelpunkte der Teilkreisbögen der Innenkante und der Außenkante gegeneinander verschoben sind. So lässt sich ein Übergang in der Größe des Strömungsquerschnitts erreichen, ohne die Strömung behindernde Vorsprünge oder Kanten in der Kurvenbahn stetig ausbilden.

Ein besonders bevorzugter, fließender Größenübergang kann erreicht werden, wenn der Mittelpunkt des Teilkreisbogens der Außenkante gegenüber dem Mittelpunkt des Teilkreisbogens der Innenkante in Richtung eines äußeren Scheitelpunkts der Kurvenumlenkung verschoben ist. Dies führt zu einer symmetrischen Vergrößerung und Verkleinerung der Strömungsrichtung und hat den Vorteil, dass das Strömungsverhalten des Fluids in der gemäß dieser Ausführungsform vorgeschlagenen Fluidströmungsführung unabhängig von der Strömungsrichtung gleich ist.

Besonders effektiv ist eine Ausführungsform der Fluidströmungsführung, bei der die Umlenkung des Fluidstroms in der Kurvenumlenkung größer als 180° ist.

In Bereichen der Fluidströmungsführung, in denen sich ohnehin eine laminare Strömung des Fluids ausbildet, also in der Kurvenführung der Kurvenbahn in Abgrenzung zur Kurvenumlenkung kann gemäß einer bevorzugten Ausführung der als Breite definierte Abstand zwischen Innenkante und Außenkante der Kurvenbahn gleich sein. Besonders bevorzugt ist auch die Höhe der Kurvenbahn gleich. In diesem Fall wird die laminare Strömung nicht gestört.

Gemäß einer besonders bevorzugten Ausführungsform kann die Höhe der Kurvenbahn im Bereich von Kurvenführung und von Kurvenumlenkung gleich sein, sich also über die gesamte Fluidströmungsführung nicht ändern. Dies ermöglicht insbesondere eine Stapelbarkeit der Fluidströmungsführungen, und vermeidet Verwirbelungen quer zu der Richtung, in der die Umlenkung erfolgt.

Eine besonders kompakte Ausführung der Fluidströmungsführung kann nach einer bevorzugten Ausführung erreicht werden, wenn der erste Anschluss an den Fluidkanal im Bereich einer Kurvenumlenkung bzw. einer der Kurvenumlenkungen angeordnet ist, wobei der erste Anschluss von der Kurvenumlenkung und von an die Kurvenumlenkung anschließenden Kurvenführungen umgeben ist. Hierdurch wird der durch den Radius/Durchmesser des Teilkreises im Innenreich Kurvenumlenkung definierte Raum effektiv ausgenutzt.

In einer Ausführungsform, in der mehr als eine Kurvenumlenkung vorsehen ist, kann eine der Kurvenumlenkungen einen Kurvenbahnabschnitt mehr aufweisen als die andere(n) Kurvenumlenkung(en). Dann ist es besonders bevorzugt, wenn der erste Anschluss an den Fluidkanal in der Kurvenumlenkung vorgesehen ist, die einen Kurvenbahnabschnitt weniger aufweist. Dort kann der innerste Teilkreis einen größeren Radius aufweisen und ermöglich so einen Fluidkanal mit größerem Querschnitt und damit höherem Durchfluss (Massestrom).

Um eine verwirbelungsarme Fluideinleitung bzw. Fluidausleitung (je nach Strömungsrichtung) in die Fluidströmungsführung zu ermöglichen, kann nach einer Ausführungsform vorgesehen sein, dass zwischen erstem Anschluss an den Fluidkanal und der Kurvenführung ein erster Trichterbereich vorgesehen ist, dessen Breite sich von einer Breite des ersten Anschusses auf eine Breite der Kurvenführung reduziert. In diesem Bereich kann ein Stützelement für eine obere Abdeckung vorgesehen sein und gleichzeitig die Funktion eines Diffusors übernehmen bzw. als Diffusor ausgebildet sein.

In ähnlicher Weise kann gemäß einer weiteren Ausführungsform der Erfindung vorgesehen sein, dass die Kurvenbahn an dem dem ersten Anschluss entgegengesetzten Ende einen zweiten Trichterbereich aufweist, mit dem sich die Kurvenführung in eine Öffnung an dem zweiten Anschluss weitet, um eine verwirbelungsarme Fluidausleitung bzw. Fluideinleitung (je nach Strömungsrichtung) zu erreichen. In diesem Bereich kann ein Stützelement für eine obere Abdeckung vorgesehen sein, das gleichzeitig die Funktion eines Diffusors übernimmt bzw. als Diffusor ausgebildet ist.

Entsprechend kann gemäß einer Ausführungsform der Erfindung in dem ersten Trichterbereich, in dem zweiten Trichterbereich und/oder in der Öffnung ein Diffusor zur Verteilung des Fluids und/oder zur Abstützung einer Abdeckung der Fluidströmungsführung vorgesehen sein.

Die Erfindung sieht vor, dass die Fluidströmungsführung einteilig mit einer Verteilerplatte für ein Fluid zum Ausbilden einer Fluidzelle eines mindestens eine erste und eine zweite Fluidzelle aufweisenden Energiespeichers zum Speichern elektrischer Energie oder einer Brennstoffzelle verbunden ist. Mit anderen Worten ist eine erfindungsgemäße Fluidströmung, wie sie vorstehend in verschiedenen Varianten und bevorzugten Ausführungsformen beschrieben wurde, jeweils in eine von mindestens oder genau zwei Verteilerplatten eines Energiespeichers integriert, wobei zwischen jeder ersten und zweiten Fluidzelle des Energiespeichers eine Ionenaustauchmembran angeordnet ist, die eine Vermischung der Fluide in der ersten und der zweiten Fluidzelle verhindert. Die Verteilerplatte weist einen Zellrahmen und zwei Fluidsegmente jeweils mit der Fluidströmungsführung auf. Der Innenrand des Zellrahmens umschließt einen aktiven Zellraum, und in dem Zellrahmen sind zwei Fluidführungen ausgebildet, von denen eine für das Einleiten des Fluids in den aktiven Zelleraum und die andere für das Ausleiten des Fluids aus dem aktiven Zellraum vorgesehen sind. Die zwei Fluidsegmente mit der Fluidströmungsführung sind jeweils von einem Abschnitt des Außenrands des Zellrahmens nach außen vorstehend angeordnet und höher ausgebildet als der Zellrahmen. Vorzugsweise entspricht die Höhe der Fluidsegmente mindestens dem Doppelten der Höhe des Zellrahmens.

Insbesondere in diesem Zusammenhang ergibt sich eine bevorzugte Verwendung einer erfindungsgemäßen Fluidströmungsführung als Shuntkanal für ein elektrisch leitfähiges Fluid zum Erzeugen eines Shuntwiderstands, durch den der Stromfluss entlang der Kurvenbahn abhängig von der Länge der Kurvenbahn reduziert wird. Diese Verwendung beispielsweise kann in einer Redox-Flow-Batterie oder Brennstoffzelle erfolgen.

Eine weitere Möglichkeit zur Verwendung gibt es in einem Wärmetauscher oder Partikelfilter.

Weitere Merkmale, Vorteile und Anwendungsmöglichkeiten der Erfindung ergeben sich auch aus der nachfolgenden Beschreibung von Ausführungsbeispielen und der Zeichnung. Alle dort beschriebenen und/oder dargestellten Merkmale gehören zum Gegenstand der Erfindung, auch unabhängig von ihrer Zusammenfassung in den einzelnen Ausführungsformen und/oder in den Ansprüchen oder deren Rückbezügen.

Es zeigen:
- Fig. 1: eine erfindungsgemäße Fluidströmungsführung gemäß einer bevorzugten Ausführungsform in der Draufsicht;
- Fig. 2: schematisch das Strömungsverhalten einer bekannten Kurvenumlenkung nach dem Stand der Technik mit baulich konstantem Strömungsquerschnitt;
- Fig. 3: schematisch die erfindungsgemäße Fluidströmungsführung gemäß Fig. 1 integriert in eine Verteilerplatte in der Draufsicht auf die Oberseite der Verteilerplatte;
- Fig. 4: schematisch eine Ausführungsform einer erfindungsgemäßen Fluidströmungsführung in einer Zellenanordnung mit zwei Verteilerplatten gemäß Fig. 3 in einer Explosionsdarstellung;

Erfindungsgemäße Fluidführungsströmen werden in einer Vielzahl technischer Bereiche benötigt und verwendet. Ein wichtiges Anwendungsgebiet sind Anordnungen, in denen ein - bspw. in einem Fluidreservoir - gespeichertes Fluid zur Reaktion mit einem anderen Stoff oder Fluid in eine aktive Zelle strömt, in der die Reaktion stattfindet. Beispiele für solche Anwendungen sind elektrische Energiespeicher, wie Redox-Flow-Batterien oder wasserstoffbetriebene Brennstoffzellen, in denen die Fluide in bzw. durch einen aktiven Zellraum strömen und reagieren. Typisch für einen solchen fluidbetrieben Energiespeicher sind zwei über eine Membran verbundene Fluidzellen (häufig auch als Halbzellen der Energiespeicherzelle bezeichnet), die von zwei verschiedenen Fluiden durchströmt werden. Durch die Membran (Ionenausaustauschmembran) tauschen die Fluide im Zuge einer chemischen Reaktion Ionen aus. Bei dieser chemischen Reaktion wird elektrische Energie freigesetzt, ohne dass sich die Fluide miteinander mischen. Die Ionenaustauschmembran dichtet die beiden Fluidzellen also fluiddicht ab.

Grundsätzlich besteht das Problem, dass die Fluide aufgrund ihrer Ionen selbst elektrisch leitend sind, mehr oder weniger schwach. Somit kann die in der Rektion erzeugte oder in dem Energiespeicher gespeicherte elektrische Energie über das Fluid selbst als elektrischer Strom abgeleitet werden, bspw. wenn mehrere Zellen des Energiespeichers elektrisch in Serie geschaltet, aber über einen Fluidkanal an dasselbe Fluidreservoir angeschlossen sind (bspw. mehrere Halbzellen in einer Batterieanordnung). Ein solcher unerwünschter Strom wird auch als Shuntstrom bezeichnet, der umso größer ist, je kleiner der elektrische Widerstand entlang des Fluidstroms ist.

Das ist bspw. bei Redox-Flow-Batterien in einer Stapelanordnung aus Energiespeicherzellen der Fall. Insbesondere in einer solchen Stapelanordnung sind mehrere Zellen des Energiespeichers, die sich auf einem unterschiedlichen Potential befinden, durch das elektrisch leitfähige Fluid miteinander verbunden, was zu einem unerwünschten Stromfluss und einer Entladung des Energiespeichers führen kann. Dem kann durch eine erfindungsgemäße Fluidströmungsführung entgegengewirkt werden, die den Strömungsweg des Fluids bzw. der Ionen in dem Fluid verlängert und damit einen möglichst hohen elektrischen Widerstand bildet.

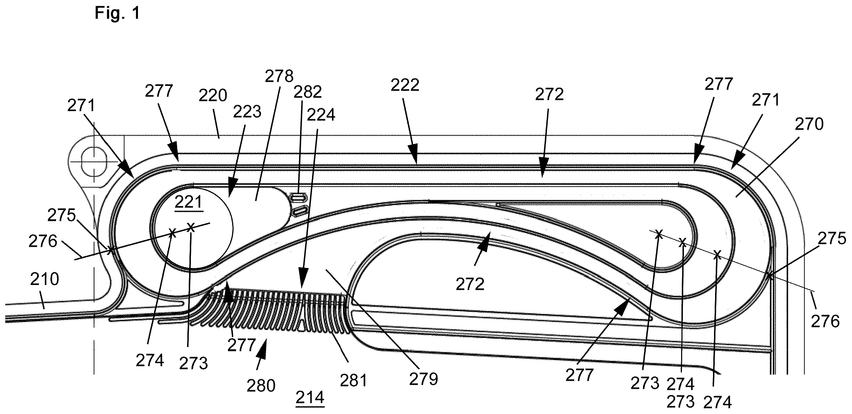

Eine solche Fluidströmungsführung 222, wie in Fig. 1 dargestellt, wird entsprechend auch als Shuntkanal bezeichnet, der elektrisch einen Shuntwiderstand bildet.

Andererseits soll der hydraulische Widerstand zum Durchströmen der Fluidströmungsführung 222 möglichst gering sein. Um diese - einander grundsätzlich widersprechenden - Eigenschaften in optimierter Weise zu verbinden, schlägt die Erfindung entsprechend vor, dass die Fluidströmungsführung 222 eine langestreckte geschwungene Kurvenbahn 270 beschreibt, wie sie mit Bezug auf Fig. 1 gemäß verschiedenen, auch jeweils einzeln miteinander kombinierbaren Aspekten ausführlicher beschrieben wird.

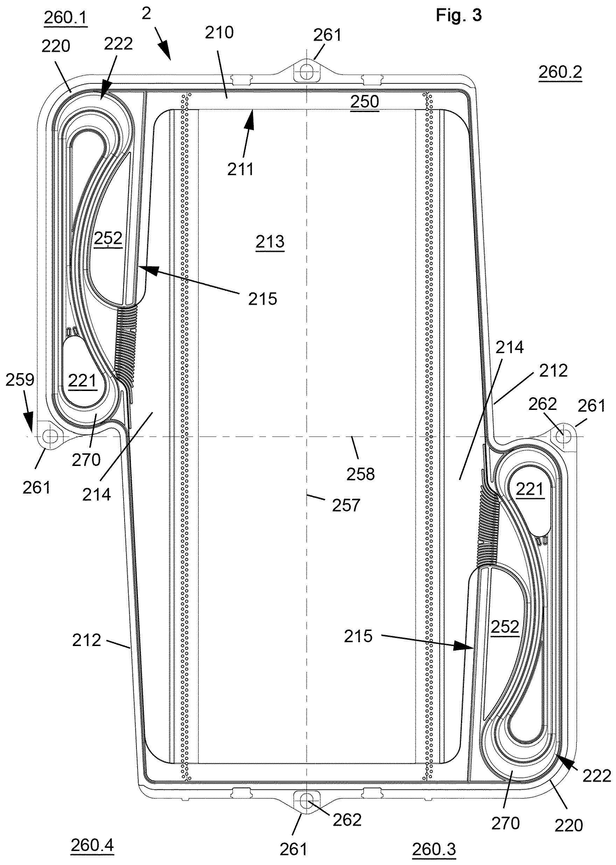

Die Fluidströmungsführung 222 verläuft zwischen einen ersten Anschluss 223 an den Fluidkanal 221 der Fluidströmungsführung 222 und einem zweiten Anschluss 224 der Fluidströmungsführung 222, bspw. an Fluidführungen 214 eines Zellrahmens 210 (beide in Fig. 1 nicht näher dargestellt, vgl. Fig. 3).

An den einander gegenüberliegenden Enden der Kurvenbahn 270 sind Kurvenumlenkungen 271 vorgesehen, in denen die Kurvenbahn 270 um mindestens 70° bis 90°, vorzugsweise mindestens 180° und im dargestellten Beispiel um mehr als 180° umgelenkt wird. Die zwei Kurvenumlenkungen 271 an den einander gegenüberliegenden Enden der Kurvenbahn 270 sind durch gerade oder geschwungene Kurvenführungen 272 verbunden, wobei der (bauliche) Strömungsquerschnitt der Kurvenbahn 270 im Bereich der Kurvenumlenkungen 271 größer ist als im Bereich der geraden oder geschwungenen Kurvenführungen 272.

Vorzugsweise beträgt die Umlenkung in der geschwungenen Kurvenführung 272 weniger als 60°, besonders bevorzugt weniger als 50° und gemäß einer weiter bevorzugten Ausführungsform zwischen 30° und 50°. In geraden oder nur in diesem vorgenannten Umlenkungsbereich bis maximal 60° geschwungenen Kurvenbahnen 272 treten nur wenige Verwirbelungen auf, so dass sich dort eine gleichmäßige (laminare) Strömung ausbildet. An den Kurvenumlenkungen 271 entstehen an der Außenkante im Bereich der Krümmung und an der Innenkante der Kurvenumlenkungen 271 Wirbelgebiete (auch als Verwirbelung des Fluids bezeichnet), die den effektiven Strömungsquerschnitt vermindern, weil in diesen Verwirbelungen kaum eine gewünschte Strömung stattfindet. Durch einen derart verminderten effektiven (hydraulischen) Strömungsquerschnitt werden die Strömungsgeschwindigkeit und der Druckverlust erhöht. Dem wird erfindungsgemäß durch die bauliche Vergrößerung des Strömungsquerschnitts im Bereich der Kurvenumlenkungen 271 entgegengewirkt. So kann das Fluid zum Erzeugen der Strömung mit geringerem Druck beaufschlagt werden als im Stand der Technik üblich.

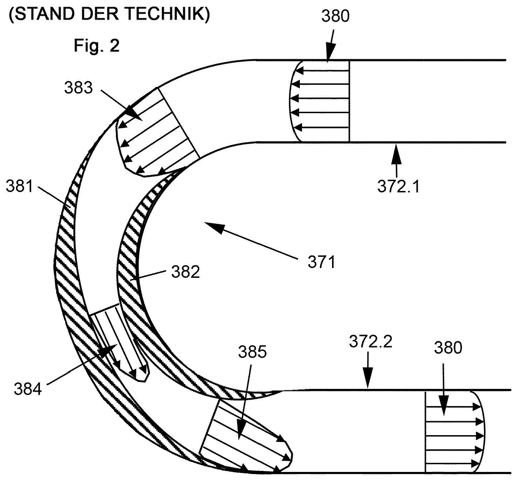

In Kontrast hierzu zeigt Fig. 2 eine Kurvenumlenkung 371 nach dem Stand der Technik mit einem baulich konstanten Strömungsquerschnitt, d.h. einem gleichbleibenden Abstand zwischen der Innenkante und der Außenkante im Bereich der Kurvenumlenkung 371. Diese schematische Darstellung dient lediglich der Erläuterung eines qualitativen Verhaltens. Physikalische Größen oder Dimensionen können daraus nicht abgeleitet werden.

In der in der Darstellung oberen (geraden) Kurvenführung 372.1 fließt ein Fluid in einer laminaren Strömung 380, von der das Geschwindigkeitsprofil (Länge der einzelnen Pfeile) mit einer die Pfeilspitzen Umhüllenden darstellt ist. Die laminare Strömung 380 zeichnet sich dadurch aus, dass das Fluid mit nahezu gleichmäßiger Geschwindigkeit strömt. Nur an den Innen- und Außenkanten der Kurvenführung 372.1 kommt es aufgrund von Reibungseffekten zu einer leichten Reduzierung der Strömungsgeschwindigkeit.

Wenn das Fluid in die Kurvenumlenkung 371 einströmt, hat es die Tendenz gerade weiter zu strömen, mit dem Effekt, dass es an die Außenkante der Kurvenumlenkung 371 anstößt. Dort kommt es zu einer Außenkantenverwirbelung 381, in der keine geordnete Strömung mehr stattfindet. Im Bereich der Innenkante der Kurvenumlenkung 371 tendiert das Fluid dazu, sich von der Kante zu entfernen und gerade weiter zu strömen. Es kommt zu einem Fluidstau, und das Fluid wird zurück in Richtung der Innenkante gedrückt. Es entsteht auch an der Innenkante eine Innenkantenverwirbelung 382, die in Strömungsrichtung gegenüber der Außenkantenverwirbelung 381 nach hinten versetzt ist, aber im Wesentlichen (in Strömungsrichtung) überlappt. In den Bereichen, in denen sich die Außenkantenverwirbelung 381 und die Innenkantenverwirbelung 382 ausbilden, entsteht eine unsymmetrische Strömung 383 (Strömung mit nicht gleichmäßiger Geschwindigkeit über den Strömungsquerschnitt).

Aufgrund den an beiden Kanten ausgebildeten Außenkantenverwirbelung 381 und Innenkantenverwirbelung 382 steht im Bereich der Kurvenumlenkung 371 für die Strömung des Fluids nur ein verminderter freier Strömungsquerschnitt zur Verfügung. Es bildet sich also eine Strömung mit vermindertem Strömungsquerschnitt 384 (verminderter effektiver Strömungsquerschnitt) aus, was zu einer erhöhten Strömungsgeschwindigkeit führt. Da der Druckverlust mit der Strömungsgeschwindigkeit steigt, führt die Kurvenumlenkung 371 zu einer Druckminderung, was in der Regel im Stand der Technik durch eine höhere Druckbeaufschlagung des Fluids ausgeglichen wird, aber zu erhöhten Anforderungen im Hinblick auf die Abdichtung führt. Die größeren Druckunterschiede sind auch einem gleichmäßigen Strömungsverhalten in dem Gesamtsystem abträglich.

Am Ende der Kurvenumlenkung 371 geht die Kurvenbahn wieder in eine gerade Kurvenführung 372.2 über, in der die Außenkantenverwirbelung 381 und die Innenkantenverwirbelung 382 langsam auflösen. Es entsteht eine unsymmetrische Strömung 385, die langsam wieder in eine laminare Strömung 380 übergeht.

Aufgrund des Druckverlustes in der Kurvenumlenkung 371 muss der Ausgangsdruck auf das Fluid aber vergrößert werden, um die Strömung in der Kurvenführung 372 aufrecht zu erhalten.

Durch die erfindungsgemäße Kurvenumlenkung 271 mit dem baulich vergrößerten Strömungsquerschnitt, wie sie in Fig. 1 dargestellt ist, wird der effektive Strömungsquerschnitt im Bereich der Kurvenumlenkung 271 durch die Verwirbelungen nicht so stark vermindert, was den Druckverlust im Bereich der Kurvenumlenkung 271 im Vergleich zu einer bekannten Kurvenumlenkung 371, wie sie in Fig. 2 dargestellt ist, signifikant reduziert.

Die Kurvenumlenkung 271 erfolgt vorzugsweise auf einer Kreisbahn, wobei die Innenkante und die Außenkante der Kurvenumlenkung 271 jeweils einen Teilkreisbogen mit festem Radius beschreiben und die Mittelpunkte 273, 274 der Teilkreisbögen der Innenkante und der Außenkante gegeneinander verschoben sind. Die Innenkante der Kurvenumlenkung 271 beschreibt immer den Rand der Kurvenumlenkung 271 mit dem kleineren Radius, und die Außenkante der Kurvenumlenkung 271 beschreibt immer den Rand der Kurvenumlenkung 271 mit dem größeren Radius. Anders ausgedrückt ist die Außenkante der Kurvenumlenkung 271 dem Ende der Kurvenbahn 270 (gleichbedeutend mit den äußersten Rand der Fluidströmungsführung) näher als die Innenkante, wobei das Fluid zwischen der Außenkante und der Innenkante als Ränder der Kurvenbahn 270 strömt, entsprechend den Rändern eines Kanals.

Besonders vorteilhaft ist es, wenn der Mittelpunkt 274 des Teilkreisbogens der Außenkante gegenüber dem Mittelpunkt 273 des Teilkreisbogens der Innenkante in Richtung des äußeren Scheitelpunkts 275 der Kurvenumlenkung 271 verschoben ist. Der äußere Scheitelpunkt 275 der Kurvenumlenkung 271 liegt vorzugsweise etwa in der Mitte des Umfangs des Teilkreisbogens der Außenkante, die am weitesten außen liegt (bezogen auf ein Zentrum/einen Mittelpunkt der Kurvenbahn 270). Hierdurch lässt sich eine sanfte Kurvenumlenkung mit vergleichbarem Strömungsverhalten an den beiden Enden 277 der Kurvenumlenkung 271 erreichen, an denen die Kurvenumlenkung 271 an die Kurvenführungen 272 angeschlossen ist. Dies erzeugt insgesamt ein verbessertes Strömungsverhalten der Fluidströmung. Typischer Weise liegen der Mittelpunkt 274 des Teilkreisbogens der Außenkante, der Mittelpunkt 273 des Teilkreisbogens der Innenkante und der äußere Scheitelpunkt 375 auf einer gemeinsamen Geraden 276.

Optimaler Weise ist die Umlenkung des Fluidstroms in der Kurvenumlenkung 271 größer als 180°. Je nach Einsatzzweck und geometrischen Gegebenheiten ist die vorliegende Erfindung auch sinnvoll anwendbar, wenn eine Kurvenumlenkung nur mindestens etwa 70° bis 90° beträgt, wobei die Angabe "etwa" Toleranzen von +/- 20% erlaubt. Durch die Verbreiterung der Strömungsbahn in der Kurvenumlenkung 271, respektive die damit verbundene Vergrößerung des Strömungsquerschnitts, ohne abrupte Kanten lässt ein in etwa gleichbleibender effektiver Strömungsquerschnitt erreichen. Vorzugweise liegt eine Umlenkung zwischen 180° und 220° und besonders bevorzugt zwischen 190° und 210°. Insofern stellt das dargestellte Ausführungsbeispiel eine besonders bevorzugte Ausführungsform dar, auf die die erfindungsgemäße Kurvenbahn 270 der Fluidströmungsführung 222 jedoch nicht beschränkt ist.

Außerdem lässt sich mit den zuvor beschriebenen erfindungsgemäßen Merkmalen auch einfach einstellen, dass die Breite der Kurvenbahn 270 an den Enden 277 der Kurvenumlenkung 271 beim Übergang in die jeweils anschließenden Kurvenführungen 272 gleich sein kann, ohne dass es zu abrupten Kanten oder Übergängen in der Kurvenbahn 270 kommt. Dadurch kann entsprechend einer bevorzugten Ausführungsform erreicht werden, dass der als Breite definierte Abstand zwischen Innenkante und Außenkante der Kurvenbahn 270 im Bereich der Kurvenführung 272 gleich und konstant ist. Hierdurch wird eine gleichmäßige Strömung des Fluids in der Kurvenführung 272 ohne das Auftreten eines Fluidstaus befördert. In den Bereichen der Kurvenumlenkung 271, in denen es zu Verwirbelungen des Fluids kommt, verbreitert sich die Kurvenbahn 270 bis zu dem Scheitelpunkt 275 (ausgehend jeweils von den Enden 277 der Kurvenführung) entsprechend der vorbeschriebenen Ausbildung der Kurvenumlenkung 271 mit den durch die Innenkante und die Außenkante beschriebenen Teilkreisbögen, deren Mittelpunkt 273, 274 gegeneinander verschoben ist. Es hat sich herausgestellt, dass sich durch diese Konfiguration auf einfache Weise ein näherungsweise gleicher effektiver Strömungsquerschnitt für das Fluid entlang der Kurvenbahn 270 ergibt.

Besonders bevorzugt kann die Höhe der Kurvenbahn 270 (in der Richtung der Innenkante und der Außenkante von Kurvenumlenkung 271 und von gerader oder geschwungener Kurvenführung 272, bspw. entlang der gesamten Kurvenbahn 270) gleich sein. Vorzugsweise entspricht die Höhe der Kurvenbahn 270 in etwa der Breite der Kurvenbahn 270 im Bereich der Kurvenführungen 272 mit der erwähnten laminaren Strömung. Dies fördert ein möglichst ungestörtes Strömungsverhalten des Fluids in der Kurvenbahn 270 der Fluidströmungsführung 222, also eine laminare Strömung bei möglichst kleinem Strömungsquerschnitt. Außerdem ist der Querschnitt flächenmäßig vergleichsweise klein, was den elektrischen Widerstand bei elektrisch leitenden Fluiden erhöht.

Entsprechend der in Fig. 1 dargestellten, bevorzugten Ausführungsform ist der Fluidkanal 221 im Bereich einer der Kurvenumlenkungen 271 (in der Darstellung der linken Kurvenumlenkung) angeordnet, wobei der Fluidkanal 221 von der Kurvenumlenkung 271 und den an die Kurvenumlenkung 271 anschließenden Kurvenführungen 272 umgeben ist. Hierdurch wird die zur Verfügung stehende Fläche, auf der die Kurvenbahn 270 angeordnet ist, optimal ausgenutzt, d.h. eine möglichst lange Strömungsführung bei optimierten hydraulischen Bedingungen und minimalem Platzbedarf erreicht. Vorzugsweise kann der Durchmesser des Fluidkanals 221 in etwa dem Durchmesser der Innenkannte der Kurvenumlenkung 271 entsprechen, die den Fluidkanal 221 umgibt. Auch wenn diese Anordnung des Fluidkanals 221 besonders bevorzugt ist, sind die vorbeschriebenen Merkmale zur Ausgestaltung der Kurvenbahn 270 auch unabhängig hiervon realisierbar, wie sich dem Fachmann unmittelbar erschließt.

Entsprechend einer bevorzugten Möglichkeit der Führung der Kurvenbahn 270 kann, wie in Fig. 1 dargestellt, eine der Kurvenumlenkungen 271 einen Kurvenbahnabschnitt mehr aufweisen als die andere der Kurvenumleitungen 271, d.h. das Fluid strömt einmal mehr durch (um) die eine Kurvenumlenkung 271 als durch (um) die andere Kurvenumlenkung 271. In dem dargestellten Beispiel ist der Fluidkanal 221 in der Kurvenumlenkung 271 vorgesehen, die einen Kurvenbahnabschnitt weniger aufweist (in der Darstellung links).

In einer Kurvenumlenkung 271 mit mehreren Kurvenbahnabschnitten sind diese nebeneinander angeordnet (in der Darstellung rechts) und bestimmen, wie oft das Fluid während des Strömens in der Kurvenbahn 270 durch die Kurvenumlenkung 271 strömt und dort umgelenkt wird. Da jeder Kurvenbahnabschnitt in einer Kurvenumlenkung 271 Platz (Grundfläche) benötigt, verbleibt in der Kurvenumlenkung 271 mit der kleineren Anzahl von Kurvenbahnabschnitten mehr Platz für den Fluidkanal 221, der entsprechend einen größeren Durchmesser aufweist, so dass eine größere Fluidmenge pro Zeiteinheit (bei gleicher Strömungsgeschwindigkeit) zugeführt werden kann.

Zwischen dem Fluidkanal 221 und der Kurvenführung 272 ist ein erster Trichterbereich 278 (im Sinne eines Trichterbereichs an einem Ende der Fluidströmungsführung 222, vorzugsweise dem Fluidkanal zugewandt) vorgesehen, dessen Breite sich von einer Breite des Fluidkanals 221 (d.h. etwa dessen Durchmesser) auf eine Breite der (in dem hier gezeigten Beispiel geraden, ggf. aber auch geschwungenen) Kurvenführung 272 reduziert.

Die Kurvenbahn 270 kann an dem dem Fluidkanal 221 entgegengesetzten Ende einen zweiten Trichterbereich 279 (im Sinne eines Trichterbereichs an dem dem einen Ende entgegengesetzten Ende oder anderen Ende der Fluidströmungsführung 222, vorzugsweise dem Fluidkanal abgewandt) aufweisen, mit dem sich die Kurvenführung 272 in eine Öffnung 280 mit größerer Breite weitet.

Es sind, abweichend von der besonders bevorzugten und in Fig. 1 dargestellten Ausführungsform auch erfindungsgemäße Fluidströmungsführungen möglich, die nur einen der erster oder zweiten der Trichterbereiche 278, 279 oder keinen Trichterbereich aufweisen.

In der Öffnung 280 des zweiten Trichterbereichs 279 kann ein Diffusor 281 zur Verteilung des Fluids vorgesehen sein. Dies führt an der Öffnung 280 - je nach Strömungsrichtung dem Einlass oder Auslass des Fluids - zu einer wenig dynamischen Situation, die gut kontrollierbar ist. Eine weitere, davon unabhängige Funktion und Wirkung des Diffusors 281 liegt darin, dass der Diffusor 281 als Stütze in der Öffnung 280 wirkt, wenn der Kurvenbahn 270 durch eine Abdeckung abgedeckt ist. Gleiches gilt wird einen Diffusor 282 im ersten Trichterbereich 278.

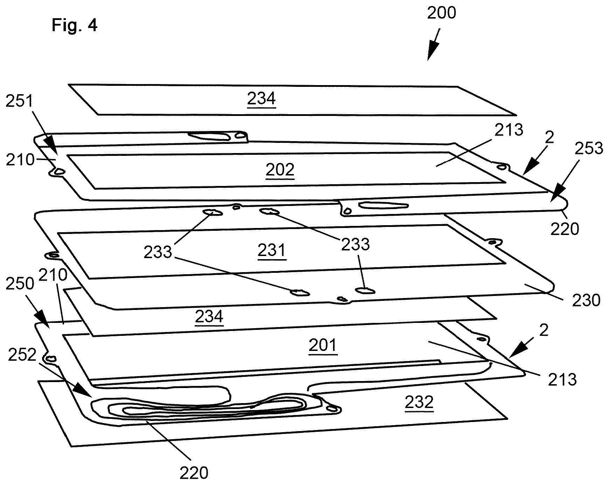

In Fig. 3 ist die vorbeschriebene Fluidströmungsführung 222 gemäß einer Ausführungsform mit einer Verteilerplatte 2 für ein Fluid zum Ausbilden einer Fluidzelle eines mindestens eine erste und eine zweite Fluidzelle 201, 202 (vgl. Fig. 4) aufweisenden Energiespeichers zum Speichern elektrischer Energie (einteilig) verbunden. Der Energiespeicher ist in dem dargestellten Beispiel eine auch als Nasszelle bezeichnete Redox-Flow-Batterie, was eine besonders bevorzugte Ausführungsform der Erfindung darstellt. Die vorbeschriebene Erfindung ist jedoch nicht auf diese Art Energiespeicher beschränkt, und lässt sich bspw. auch in Wasserstoff-Brennzellen aus vergleichbaren Gründen vorteilhaft verwenden.

Auch Anwendungen auf anderen Gebieten als Energiespeicher stellen sinnvolle Verwendungsmöglichkeiten für die erfindungsgemäße Fluidströmungsführung dar, wie bspw. Wärmetauscher oder Partikelfilter (im Sinne von durch das Fluid durchströmten Partikelfeldern, etwa zum Abscheiden von Feststoffen bestimmter Größe oder bestimmter Eigenschaften aus dem Fluid).

In Energiespeichern mit elektrisch leitenden Fluiden wird die Fluidströmungsführung 222, wie bereits ausführlich erläutert, als Shuntkanal verwendet.

In Energiespeichern, wie bspw. in einer Redox-Flow-Batterie, ist - wie in Fig. 4 dargestellt - meist zwischen jeder ersten und die zweiten Fluidzelle 201, 202 eine Ionenaustauchmembran 231 angeordnet ist, die eine Vermischung der Fluide in der ersten und der zweiten Fluidzelle 201, 202 verhindert, wobei die Verteilerplatte 2 einen Zellrahmen 210 aufweist, dessen Innenrand 211 einen aktiven Zellraum 213 umschließt und in dem zwei Fluidführungen 214 ausgebildet sind, von denen eine für das Einleiten des Fluids in den aktiven Zelleraum 213 und die andere für das Ausleiten des Fluids aus dem aktiven Zellraum 213 vorgesehen sind. Je eine erfindungsgemäße Fluidströmungsführung 222 ist in einer von zwei Fluidsegmenten 220 der Verteilerplatte 2 vorgesehen, wobei die Fluidsegmente 220 jeweils von einem Abschnitt 215 des Außenrands 212 des Zellrahmens 210 nach außen vorstehend angeordnet sind. Die Höhe der Fluidsegmente 220 entspricht vorzugsweise mindestens dem Doppelten der Höhe des Zellrahmens 210, in der hier dargestellten Ausführungsform genau dem Doppelten (Zweifachen). Gemäß einer bevorzugten Ausführung sind sie in jedem Fall höher als der Zellrahmen 210.

Insbesondere zeigt die Verteilerplatte 2 einen in etwa rechteckigen Aufbau des Zellrahmens 210, dessen Innenrand 211 den ebenso rechteckigen aktiven Zellraum 213 umgibt. Zwischen den Fluidsegmenten 220 und dem aktiven Zellraum 213 ist eine Fluidführung 214 zum möglichst gleichmäßigen Ein- und Ausleiten der Fluidströmung in den und aus dem aktiven Zellraum 213 als Vertiefung in einer Oberseite 250 des Zellrahmens 210 ausgebildet. Die Fluidsegmente 220 sind jeweils an dem Außenrand 212 in Abschnitten 215 ausgebildet, die jeweils an Längsseiten des Zellrahmens 210 liegen. Die Abschnitte finden sich in Verteilerplattenbereichen 260.1 und 260.3, die durch die Längssymmetrieachse 257 und die Quersymmetrieachse 258 definiert bzw. abgegrenzt werden. In den Verteilerplattenbereichen 260.2 und 260.4 sind keine Abschnitte 215 mit Fluidsegmenten 220 vorgesehen, wobei sich die Verteilerplattenbereichen 260.2 und 260.4 sowie 260.1 und 260.3 jeweils einander diametral gegenüberliegend an den (längeren) Längsseiten des Zellrahmens 210 befinden, die durch die (kürzeren) Querseiten des Zellrahmens 210 miteinander verbunden sind.

Jedes der Fluidsegmente 220 weist einen Fluidkanal 221 und einen Shuntkanal 222 (Fluidströmungsführung) auf, der jeweils zwischen dem Fluidkanal 221 und der Fluidführung 214 als Vertiefung ausgebildet ist. Der Shuntkanal 222 verläuft entlang der langestreckten geschwungene Kurvenbahn 270 zur Führung der Fluidströmung. Der Verlauf von Kurvenbahn 270 und die Anordnung des Fluidkanals 221 wurden mit Bezug auf Fig. 1 bereits detailliert beschrieben.

Auch wenn in den Fig. 3 und 4 nicht deutlich zu erkennen, bilden der Zellrahmen 210 und die Fluidsegmente 220 mit ihren Oberseiten 250 und 252 eine gemeinsame plane Oberflächenebene aus, die durch eine plane Gegenfläche abdichtbar ist und die obere Begrenzung des aktiven Zellraums 213, der Fluidführung 214 sowie der Fluidströmungsführung 222 bildet. Die Fluidsegmente 220 sind etwa doppelt so hoch wie der Zellrahmen 210, so dass die Unterseite 251 der Fluidsegment2 220 über die Unterseite 250 des Zellrahmens 210 vorsteht.

In der Mitte der Querseiten des Zellrahmens 210 und an den Fluidsegmenten 220 an der Position, die in der Projektion etwa der Mitte der Längsseite des Zellrahmens 210 entspricht, sind flanschartige Vorsprünge 261 jeweils mit einer runden Durchgangsöffnung 262 ausgebildet, mit der die Verteilerplatte 2 auf nicht dargestellte Stapelstangen aufsteckbar ist, um mehrere Verteilerplatten 2 beispielsweise zur Bildung einer Zellenanordnung aus einer ersten und zweiten Fluidzelle 201, 202 oder mehrerer Zellenanordnungen übereinander zu stapeln.

Die Vorsprünge 261 an den Fluidsegmenten 220 ragen abschnittsweise über die Abschnittsbegrenzungsebene 259 hinaus, die senkrecht zu der Oberseite 250 des Zellrahmens gerichtet durch die Quersymmetrieachse 258 verläuft. Dieses Hinausragen ist begrenzt auf einen Höhenbereich der Fluidsegmente 220, der auch im Höhenbereich des Zellrahmens 110 liegt. Außerdem erstreckt sich der Vorsprung 261 - ausgehend von der Oberseite 252 des Fluidsegments 220 - nur über die halbe Höhe des Zellrahmens 110. So können zwei Verteilerplatten 2 an ihren Unterseiten 251, 253 von Zellrahmen 210 und Fluidsegmenten 220 derart aneinandergefügt gestapelt werden, dass die Unterseiten 251 der Zellrahmen 210 direkt aneinander anliegen, ohne dass die flanschartigen Vorsprünge 261 der Fluidsegmente 220 (oder die Fluidsegmente 220 selbst) miteinander kollidieren. Hierdurch wird die Stapelbarkeit sichergestellt.

Fig. 4 zeigt den Aufbau einer Zellenanordnung 200 aus zwei Verteilerplatten 2 der Ausführungsform gemäß Fig. 3. Die Zellenanordnung 200 ist ein als Redox-Flow-Batterie ausgebildeter Energiespeicher mit einer ersten Fluidzelle 201 und einer zweiten Fluidzelle 202.

Zwischen die erste Verteilerplatte 2 mit nach oben weisender Oberfläche 250, 252 von Zellrahmen 210 und Fluidsegmenten 220 (in der Darstellung die untere Verteilerplatte 2) und die zweite Verteilerplatte 2 mit nach oben weisender Unterfläche 251, 253 von Zellrahmen 210 und Fluidsegmenten 220 (in der Darstellung die obere Verteilerplatte 2) ist eine Dichtung 230 mit einer in die Dichtung 230 integrierten Ionenaustauschmembran 231 zwischengelegt und derart abdichtend eingeklemmt ist, dass eine Vermischung von Fluid in der ersten Fluidzelle 201 der ersten der Verteilerplatten 2 und Fluid in der zweiten Fluidzelle 202 der zweiten der Verteilerplatten 2 verhindert ist. Auf der der Ionenaustauschmembran 231 gegenüberliegenden Seite des Zellrahmens 210 jeder der Verteilerplatten 2 ist eine Elektrodenplatte 232 derart abdichtend geordnet ist, dass der aktive Zellraum 213 jeder der Verteilerplatten 2 fluiddicht verschlossen ist, so dass über die Fluidsegmente 220 jeder der aktiven Zellräume 213 von dem Fluid durchströmbar ist. Eine in den Figuren nicht dargestellte Klemmeinrichtung ist vorgesehen, die zum Ausüben eines Klemmdrucks auf die aufeinander liegenden Zellrahmen 210 mit der Ionenaustauschmembran 231 respektive Dichtung 230 und den Elektrodenplatten 232 ausgebildet ist. Die erfindungsgemäße Klemmeinrichtung kann bspw. Abschluss-Klemmplatten mit Anschlüssen zur Verbindung an ein Fluidreservoir aufweisen und mittels dieser Klemmplatten die Elektrodenplatten 232 und Zellrahmen 210 mit der zwischenliegenden Dichtung 230 mit Ionenaustauschmembran 231 mit für die Dichtwirkung ausreichendem Anpressdruck zusammendrücken. Anstelle einer Klemmeinrichtung können auch andere Verbindungseinrichtungen vorgesehen sein, bspw. durch Verschweißen oder Verkleben.

Die Dichtung 230 ist auf die Oberseite 250, 252 des Zellrahmens 210 und der Fluidsegmente 220 jeder der zwei Verteilerplatten 2 derart auflegbar, dass jeweils die Oberseiten 250, 252 der Zellrahmen 210 und der Fluidsegmente 220 jeder der zwei Verteilerplatten 2 einander zugewandt angeordnet sind. Durch die erfindungsgemäß vorgesehene Dichtung 230 mit integrierter Ionenaustauschmembran 231 werden also durch das Verklemmen der Dichtung 230 mit Ionenaustauschmembran 231 zwischen den Verteilerplatten 2 nicht nur die aktiven Zellräume 213 abgedichtet, sondern auch die (zur Oberseite offenen) Fluidführungen 214 in den Zellrahmen 210 und die Fluidströmungsführungen 222 in den Fluidsegmenten 220, wobei die Dichtung 230 Durchlässe 233 im Bereich der Fluidkanäle 221 aufweist, damit diese an ein Fluidreservoir anschließbar und von dem Fluid durchströmbar sind.

In jedem aktiven Zellraum 213 kann ein insbesondere leitfähiger Filz 234 aufgenommen sein, der die effektive Elektrodenfläche in dem aktiven Zellraum 213 vergrößert.

Eine solche Zellenanordnung aus zwei Verteilerplatten 2 bildet bspw. eine Zelle des Energiespeichers mit einer ersten und einer zweiten Fluidzelle 201, 202, die über die Ionenaustauschmembran 231 elektrisch oder elektrochemisch miteinander reagieren können. Der Energiespeicher kann insbesondere als Redox-Flow-Batterie ausgebildet sein.

Es können Stapel aus mehreren solcher Zellenanordnungen gebildet werden, in denen mehrere Zellen elektrisch in Serie geschaltet sind. Dazu sind mehrere Zellenanordnungen übereinander in einem Stapel angeordnet, wobei die Elektrodenplatten 232 zwischen zwei benachbarten Zellanordnungen als Bipolarplatten ausgebildet sind. Durch die Verwendung von Bipolarplatten werden mehrere Zellenanordnungen des Energiespeichers in Serie geschaltet, indem sie Elektroden unterschiedlicher elektrischer Polung für zwei benachbarte aktive Zellräume 213 bilden.

Gerade in solchen Anordnungen mit leitfähigen Fluiden können möglichst lange Fluidströmungsführungen 222 mit gutem Strömungsverhalten wichtig sein, um hohe Shuntwiderstände entlang der Strömungsbahn zu bilden, durch den der Stromfluss entlang der Kurvenbahn anhängig von der Länge der Kurvenbahn reduziert wird. Die Erfindung schlägt eine Fluidströmungsführung 222 mit gegenüber dem Stand der Technik verbessertem Strömungsverhalten und dennoch einem hohen Shuntwiderstand der, der insbesondere mit zunehmender Länge der Strömungsbahn auch größer wird.

### Bezugszeichenliste

- 2: Verteilerplatte
- 200: Zellenanordnung aus zwei Verteilerplatten
- 201: erste Fluidzelle der Zellenanordnung (des Energiespeichers)
- 202: zweite Fluidzelle der Zellenanordnung (des Energiespeichers)
- 210: Zellrahmen
- 211: Innenrand des Zellrahmens
- 212: Außenrand des Zellrahmens
- 213: aktiver Zellraum
- 214: Fluidführung
- 215: Abschnitt des Außenrands des Zellrahmens
- 220: Fluidsegment
- 221: Fluidkanal
- 222: als Shuntkanal ausgebildete Fluidströmungsführung
- 223: erster Anschluss der Fluidströmungsführung
- 224: zweiter Anschluss der Fluidführungsströmung
- 230: Dichtung
- 231: Ionenaustauschmembran
- 232: Elektrodenplatte
- 233: Durchlass für Fluidkanal
- 234: Filz
- 250: Oberseite des Zellrahmens
- 251: Unterseite des Zellrahmens
- 252: Oberseite des Fluidsegments
- 253: Unterseite des Fluidsegments
- 257: Längssymmetrieachse
- 258: Quersymmetrieachse
- 259: Abschnittsbegrenzungsebene
- 260.1 bis 260.4: Verteilerplattenbereiche
- 261: flanschartiger Vorsprung
- 262: runde Durchgangsöffnung
- 270: als langestreckte geschwungene Kurvenbahn ausgebildete Fluidströmungsführung im Sinne eines Shuntkanals
- 271: Kurvenumlenkung
- 272: gerade oder geschwungene Kurvenführung
- 273: Mittelpunkt des Teilkreisbogens der Innenkante der Kurvenumlenkung
- 274: Mittelpunkt des Teilkreisbogens der Außenkante der Kurvenumlenkung
- 275: äußerer Scheitelpunkt des Teilkreisbogens der Kurvenumlenkung
- 276: durch die Mittelpunkte der Teilkreisbögen und den äußeren Scheitelpunkt definierte Gerade
- 277: Ende der Kurvenumlenkung
- 278: erster Trichterbereich
- 279: zweiter Trichterbereich
- 280: Öffnung
- 281: Diffusor
- 282: Diffusor

- 371: Kurvenumlenkung mit baulich konstanten Führungsquerschnitt (Stand der Technik)
- 372.1: gerade Kurvenführung
- 372.2: gerade Kurvenführung
- 380: laminare Strömung
- 381: Außenkantenverwirbelung
- 382: Innenkantenverwirbelung
- 383: unsymmetrische Strömung
- 384: Strömung mit vermindertem Strömungsquerschnitt

## Patentansprüche

1. Fluidströmungsführung für das Führen eines strömenden Fluids zwischen einem ersten Anschluss (223) der Fluidströmungsführung (222) an einen Fluidkanal (221) und einem zweiten Anschluss (224) der Fluidströmungsführung (222), wobei die Fluidströmungsführung (222) einteilig mit einer Verteilerplatte (2) für ein Fluid zum Ausbilden einer Fluidzelle (201, 202) eines mindestens eine erste und eine zweite Fluidzelle (201, 202) aufweisenden Energiespeichers zum Speichern elektrischer Energie oder einer Brennstoffzelle verbunden ist, wobei die Fluidströmungsführung (222) eine langgestreckte geschwungene Kurvenbahn (270) beschreibt, die zwischen dem ersten Anschluss (223) und dem zweiten Anschluss (224) verläuft, wobei in der Kurvenbahn (270) mindestens eine Kurvenumlenkung (271) und mindestens eine an die Kurvenumlenkung (271) anschließende gerade oder geschwungene Kurvenführung (272) vorgesehen sind, wobei in der Kurvenumlenkung (271) die Kurvenbahn (270) um mindestens 70° umgelenkt wird, **dadurch gekennzeichnet, dass** der Strömungsquerschnitt der Kurvenbahn (270) im Bereich der Kurvenumlenkungen (271) größer ist als im Bereich der geraden oder geschwungenen Kurvenführungen (272).

2. Fluidströmungsführung nach Anspruch 1, **dadurch gekennzeichnet, dass** die Kurvenumlenkung (271) auf einer Kreisbahn erfolgt, wobei die Innenkante und die Außenkante der Kurvenumlenkung (271) jeweils einen Teilkreisbogen mit festem Radius beschreiben und die Mittelpunkte (273, 274) der Teilkreisbögen der Innenkante und der Außenkante gegeneinander verschoben sind.

3. Fluidströmungsführung nach Anspruch 2, **dadurch gekennzeichnet, dass** der Mittelpunkt (274) des Teilkreisbogens der Außenkante gegenüber dem Mittelpunkt (273) des Teilkreisbogens der Innenkante in Richtung eines äußeren Scheitelpunkts (275) der Kurvenumlenkung (271) verschoben ist.

4. Fluidströmungsführung nach einem der vorhergehenden Ansprüche, **dadurch gekennzeichnet, dass** die Umlenkung des Fluidstroms in der Kurvenumlenkung (271) größer als 180° ist.

5. Fluidströmungsführung nach einem der vorhergehenden Ansprüche, **dadurch gekennzeichnet, dass** der als Breite definierte Abstand zwischen Innenkante und Außenkante der Kurvenbahn (270) im Bereich der Kurvenführung (272) gleich ist.

6. Fluidströmungsführung nach einem der vorhergehenden Ansprüche, **dadurch gekennzeichnet, dass** die Höhe der Kurvenbahn (270) gleich ist.

7. Fluidströmungsführung nach einem der vorhergehenden Ansprüche, **dadurch gekennzeichnet, dass** der erste Anschluss (223) an den Fluidkanal (221) im Bereich einer der Kurvenumlenkungen (271) angeordnet ist, wobei der erste Anschluss (223) von der Kurvenumlenkung (271) und den an die Kurvenumlenkung (271) anschließenden Kurvenführungen (272) umgeben ist.

8. Fluidströmungsführung nach Anspruch 7, **dadurch gekennzeichnet, dass** eine der Kurvenumlenkungen (271) einen Kurvenbahnabschnitt mehr aufweist als die andere der Kurvenumlenkungen (271), wobei der erste Anschluss (223) an den Fluidkanal (221) in der Kurvenumlenkung (271) vorgesehen ist, die einen Kurvenbahnabschnitt weniger aufweist.

9. Fluidströmungsführung nach einem der vorhergehenden Ansprüche, **dadurch gekennzeichnet, dass** zwischen erstem Anschluss (223) an den Fluidkanal (221) und der Kurvenführung (272) ein erster Trichterbereich (278) vorgesehen ist, dessen Breite sich von einer Breite des ersten Anschusses (223) auf eine Breite der Kurvenführung (272) reduziert.

10. Fluidströmungsführung nach einem der vorhergehenden Ansprüche, **dadurch gekennzeichnet, dass** die Kurvenbahn (270) einen zweiten Trichterbereich (279) aufweist, mit dem sich die Kurvenführung (272) in eine Öffnung (280) an dem zweiten Anschluss (224) weitet.

11. Fluidströmungsführung nach Anspruch 10, **dadurch gekennzeichnet, dass** in dem zweiten Trichterbereich (272) und/oder in der Öffnung (280) ein Diffusor zur Verteilung des Fluids und/oder zur Abstützung vorgesehen ist.

12. Fluidströmungsführung nach einem der vorhergehenden Ansprüche, **dadurch gekennzeichnet, dass** die Fluidströmungsführung (222) einteilig mit einer Verteilerplatte (2) für ein Fluid zum Ausbilden einer Fluidzelle (201, 202) eines mindestens eine erste und eine zweite Fluidzelle (201, 202) aufweisenden Energiespeichers zum Speichern elektrischer Energie verbunden ist, wobei zwischen jeder ersten und zweiten Fluidzelle (201, 202) des Energiespeichers eine Ionenaustauchmembran (231) angeordnet ist, die eine Vermischung der Fluide in der ersten und der zweiten Fluidzelle (201, 202) verhindert, und wobei die Verteilerplatte (2) einen Zellrahmen (210) aufweist, dessen Innenrand (211) einen aktiven Zellraum (213) umschließt und in dem zwei Fluidführungen (214) ausgebildet sind, von denen eine für das Einleiten des Fluid in den aktiven Zelleraum (213) und die andere für das Ausleiten des Fluids aus dem aktiven Zellraum (213) vorgesehen sind, und zwei Fluidsegmente (220) mit der Fluidströmungsführung (222), wobei die Fluidsegmente (220) jeweils von einem Abschnitt (215) des Außenrands (212) des Zellrahmens (210) nach außen vorstehend angeordnet und höher als der Zellrahmen (210) sind.

13. Verwendung einer Fluidströmungsführung nach einem der Ansprüche 1 bis 12 als Shuntkanal für ein elektrisch leitfähiges Fluid zum Erzeugen eines Shuntwiderstands, durch den der Stromfluss entlang der Kurvenbahn (270) abhängig von der Länge der Kurvenbahn (270) reduziert wird.

14. Verwendung einer Fluidströmungsführung nach einem der Ansprüche 1 bis 12 in einer Redox-Flow-Batterie oder Brennstoffzelle.

## Claims

1. A fluid flow guide for guiding a flowing fluid between a first connection (223) of the fluid flow guide (222) to a fluid channel (221) and a second connection (224) of the fluid flow guide (222), wherein the fluid flow guide (222) is integrally connected to a distributor plate (2) for a fluid for forming a fluid cell (201, 202) of an energy storage device having at least a first and a second fluid cell (201, 202) for storing electrical energy or of a fuel cell, wherein the fluid flow guide (222) follows an elongated curved path (270) extending between the first connection (223) and the second connection (224), wherein at least one curve deflection (271) and at least one straight or curved guide section (272) adjoining the curve deflection (271) are provided in the curved path (270), wherein the curved path (270) is deflected through at least 70° at the curve deflection (271), **characterised in that** the flow cross-section of the curved path (270) in the region of the curve deflections (271) is larger than in the region of the straight or curved guide sections (272).

2. The fluid flow guide according to claim 1, **characterised in that** the curve deflection (271) follows a circular path, wherein the inner edge and the outer edge of the curve deflection (271) each describe a circular arc having a fixed radius, and the centres (273, 274) of the circular arcs of the inner edge and the outer edge are offset relative to one another.

3. The fluid flow guide according to claim 2, **characterised in that** the centre (274) of the circular arc of the outer edge is offset relative to the centre (273) of the circular arc of the inner edge in the direction of an outer apex (275) of the curve deflection (271).

4. The fluid flow guide according to any one of the preceding claims, **characterised in that** the deflection of the fluid flow in the curve deflection (271) is greater than 180°.

5. The fluid flow guide according to any one of the preceding claims, **characterised in that** the distance between the inner edge and the outer edge of the curved path (270), defined as the width, is constant in the region of the guide section (272).

6. The fluid flow guide according to any one of the preceding claims, **characterised in that** the height of the curved path (270) is constant.

7. The fluid flow guide according to any one of the preceding claims, **characterised in that** the first connection (223) to the fluid channel (221) is arranged in the region of one of the curve deflections (271), wherein the first connection (223) is surrounded by the curve deflection (271) and the guide sections (272) adjoining the curve deflection (271).

8. The fluid flow guide according to claim 7, **characterised in that** one of the curve deflections (271) has one more curved-path section than the other of the curve deflections (271), wherein the first connection (223) to the fluid channel (221) is provided in the curve deflection (271) having one fewer curved-path section.

9. The fluid flow guide according to any one of the preceding claims, **characterised in that** a first funnel region (278) is provided between the first connection (223) to the fluid channel (221) and the guide section (272), the width of said funnel region decreasing from a width of the first connection (223) to a width of the guide section (272).

10. The fluid flow guide according to any one of the preceding claims, **characterised in that** the curved path (270) has a second funnel region (279) by means of which the guide section (272) widens into an opening (280) at the second connection (224).

11. The fluid flow guide according to claim 10, **characterised in that** a diffuser for distributing the fluid and/or for providing support is provided in the second funnel region (272) and/or in the opening (280).

12. The fluid flow guide according to any one of the preceding claims, **characterised in that** the fluid flow guide (222) is integrally connected to a distributor plate (2) for a fluid for forming a fluid cell (201, 202) of an energy storage device having at least a first and a second fluid cell (201, 202) for storing electrical energy, wherein an ion-exchange membrane (231) is arranged between each first and second fluid cell (201, 202) of the energy storage device and prevents mixing of the fluids in the first and the second fluid cell (201, 202), and wherein the distributor plate (2) has a cell frame (210), the inner edge (211) of which encloses an active cell space (213) and in which two fluid guides (214) are formed, one of which is provided for introducing the fluid into the active cell space (213) and the other for discharging the fluid from the active cell space (213), and two fluid segments (220) with the fluid flow guide (222), wherein the fluid segments (220) are each arranged so as to project outwards from a section (215) of the outer edge (212) of the cell frame (210) and are higher than the cell frame (210).

13. The use of a fluid flow guide according to any one of claims 1 to 12 as a shunt channel for an electrically conductive fluid for generating a shunt resistance by means of which the current flow along the curved path (270) is reduced depending on the length of the curved path (270).

14. The use of a fluid flow guide according to any one of claims 1 to 12 in a redox flow battery or fuel cell.

## Revendications

1. Guide d'écoulement de fluide destiné à guider un fluide s'écoulant entre une première connexion (223) du guide d'écoulement de fluide (222) à un canal de fluide (221) et une deuxième connexion (224) du guide d'écoulement de fluide (222), dans lequel le guide d'écoulement de fluide (222) est connecté d'un seul tenant à une plaque de distribution (2) pour fluide pour former une cellule de fluide (201, 202) d'un dispositif de stockage d'énergie comprenant au moins une première et une deuxième cellule de fluide (201, 202) pour le stockage d'énergie électrique ou d'une pile à combustible, dans lequel le guide d'écoulement de fluide (222) décrit une trajectoire courbe allongée (270) s'étendant entre la première connexion (223) et la deuxième connexion (224), dans lequel au moins une déviation de courbe (271) et au moins une section guide droite ou courbe (272) adjacente à la déviation de courbe (271) sont prévues sur la trajectoire courbe (270), dans lequel la trajectoire courbe (270) est déviée d'au moins 70° dans la déviation de courbe (271), **caractérisé en ce que** la section transversale d'écoulement de la trajectoire courbe (270) dans la zone des déviations de courbe (271) est plus grande que dans la zone des sections guides (272) droites ou courbes.

2. Guide d'écoulement de fluide selon la revendication 1, **caractérisé en ce que** la déviation de courbe (271) suit un trajet circulaire, dans lequel le bord intérieur et le bord extérieur de la déviation de courbe (271) délimitant chacun un arc de cercle présentant un rayon fixe, et les centres (273, 274) des arcs de cercle du bord intérieur et du bord extérieur étant décalés l'un par rapport à l'autre.

3. Guide d'écoulement de fluide selon la revendication 2, **caractérisé en ce que** le centre (274) de l'arc de cercle du bord extérieur est décalé par rapport au centre (273) de l'arc de cercle du bord intérieur dans la direction d'un sommet extérieur (275) de la déviation de courbe (271).

4. Guide d'écoulement de fluide selon l'une quelconque des revendications précédentes, **caractérisé en ce que** la déviation de l'écoulement de fluide dans la déviation de courbe (271) est supérieure à 180°.

5. Guide d'écoulement de fluide selon l'une quelconque des revendications précédentes, **caractérisé en ce que** la distance entre le bord intérieur et le bord extérieur de la trajectoire courbe (270), définie comme largeur, est constante dans la zone de la section guide de courbe (272).

6. Guide d'écoulement de fluide selon l'une quelconque des revendications précédentes, **caractérisé en ce que** la hauteur de la trajectoire courbe (270) est constante.

7. Guide d'écoulement de fluide selon l'une des revendications précédentes, **caractérisé en ce que** la première connexion (223) au canal de fluide (221) est disposé dans la zone de l'une des déviations de courbe (271), dans lequel la première connexion (223) est entourée par la déviation de courbe (271) et les sections guides (272) adjacentes à la déviation de courbe (271).

8. Guide d'écoulement de fluide selon la revendication 7, **caractérisé en ce que** l'une des déviations de courbe (271) possède une section de trajet courbe de plus que l'autre des déviations de courbe (271), dans lequel la première connexion (223) au canal de fluide (221) est prévue dans la déviation de courbe (271) ayant une section de trajet courbe de moins.

9. Guide d'écoulement de fluide selon l'une quelconque des revendications précédentes, **caractérisé en ce qu'une** première zone d'entonnoir (278) est prévue entre la première connexion (223) au canal de fluide (221) et la section guide de courbe (272), dont la largeur diminue depuis une largeur de la première connexion (223) jusqu'à une largeur de la section guide de courbe (272).

10. Guide d'écoulement de fluide selon l'une des revendications précédentes, **caractérisé en ce que** la trajectoire courbe (270) présente une deuxième zone d'entonnoir (279) avec laquelle la section guide de courbe (272) s'élargit en une ouverture (280) au niveau de la deuxième connexion (224).

11. Guide d'écoulement de fluide selon la revendication 10, **caractérisé en ce qu'un** diffuseur est prévu dans la deuxième zone d'entonnoir (272) et/ou dans l'ouverture (280) pour distribuer le fluide et/ou pour fournir un support.

12. Guide d'écoulement de fluide selon l'une quelconque des revendications précédentes, **caractérisé en ce que** le guide d'écoulement de fluide (222) est relié d'un seul tenant à une plaque de distribution (2) pour fluide pour former une cellule de fluide (201, 202) d'un dispositif de stockage d'énergie comportant au moins une première et une deuxième cellule de fluide (201, 202) destinées au stockage d'énergie électrique, dans lequel une membrane échangeuse d'ions (231) est disposée entre chaque première et deuxième cellule de fluide (201, 202) du dispositif de stockage d'énergie et empêche le mélange des fluides dans la première et la deuxième cellule de fluide (201, 202), et dans lequel la plaque de distribution (2) comporte un cadre de cellule (210) dont le bord intérieur (211) délimite un espace de cellule actif (213) et dans lequel sont formés deux guides de fluide (214), dont l'un est prévu pour l'introduction du fluide dans l'espace de cellule actif (213) et l'autre pour l'évacuation du fluide de l'espace de cellule actif (213), et deux segments de fluide (220) avec le guide d'écoulement de fluide (222), dans lequel les segments de fluide (220) sont chacun disposés en saillie vers l'extérieur à partir d'une section (215) du bord extérieur (212) du cadre de cellule (210) et sont plus hauts que le cadre de cellule (210).

13. Utilisation d'un guide d'écoulement de fluide selon l'une quelconque des revendications 1 à 12 comme canal de dérivation pour un fluide électriquement conducteur pour générer une résistance de dérivation par laquelle le flux de courant le long de la trajectoire courbe (270) est réduit en fonction de la longueur de la trajectoire courbe (270).

14. Utilisation d'un guide d'écoulement de fluide selon l'une quelconque des revendications 1 à 12 dans une batterie à flux redox ou une pile à combustible.
